# EUROPÄISCHE PATENTSCHRIFT

(11) **EP 2 975 310 B1**
(45) Veröffentlichungstag und Bekanntmachung des Hinweises auf die Patenterteilung: **17.07.2019**
(21) Anmeldenummer: 15177234.0
(22) Anmeldetag: 17.07.2015
(51) Int. Cl.: F16L 13/14, B65D 59/06

(54) **VORRICHTUNG ZUM ABDECKEN EINES HOHLPROFILES**
DEVICE FOR COVERING A HOLLOW PROFILE
DISPOSITIF DE RECOUVREMENT D'UN PROFILE CREUX

(30) Priorität: 17.07.2014 AT 5011414 U
(43) Veröffentlichungstag der Anmeldung: 20.01.2016
(73) Patentinhaber: van Roij, Johannes CJ, 2360 Oud-Turnhout (BE); Zirkel, Frank, 71364 Winnenden (DE)
(72) Erfinder: Van Roij, Johannes C. J., 2360 Oud-Turnhout (BE); Zirkel, Frank, 71364 Winnenden (DE)
(74) Vertreter: Rumrich, Gabriele

(56) Entgegenhaltungen:
- EP-A1- 0 633 126
- EP-A1- 2 202 440
- FR-A1- 2 723 723

## Beschreibung

Die Erfindung bezieht sich auf eine Vorrichtung zum Abdecken eines Hohlprofiles, insbesondere eines Rohres, eines Fittings und/oder einer Muffe, mit einer wenigstens den Profilhohlquerschnitt überdeckenden Folie, die eine Perforation zur Abnahme wenigstens eines Teiles der Folie vom Hohlprofil aufweist.

Derartige Vorrichtung zum Abdecken eines Hohlprofiles, insbesondere eines Rohres, eines Fittings und/oder einer Muffe sind beispielsweise Abdeckkappen oder Deckel, die in die Querschnittsöffnung des Hohlprofils eingesetzt sind um bei Lagerung und Transport ein Eindringen von Verunreinigungen in das Hohlprofil zu vermeiden und somit umständliche Reinigungsarbeiten an Baustellen vermeiden zu können. Die Abdeckkappen oder Deckel werden vor einer Montage auf einer Baustelle vom jeweiligen Hohlprofil, insbesondere Fitting, Rohr od. dgl. abgenommen und die entsprechenden Bauteile zur gewünschten Installation zusammengesetzt. Dazu werden die Rohre, Fittinge und/oder Muffen vorzugsweise verpresst, verklebt oder verlötet oder auch geschweisst, gesteckt oder verschraubt. Insbesondere nach einem Verpressen ist nicht immer unmittelbar ersichtlich ob die eine oder andere Verbindung bereits ordnungsgemäß verpresst ist, was in der Praxis immer wieder nacharbeiten erforderlich macht.

Des Weiteren ist es als Vorrichtung zum Abdecken von Hohlprofilen, insbesondere Rohren, Fittingen und/oder Muffen Folien, insbesondere Schrumpffolien vorzusehen, die über das Hohlprofilende gezogen werden und das Hohlprofilinnere bis zur Folienabnahme vor Verunreinigungen schützen. Solche den Profilhohlquerschnitt überdeckenden Folien weisen üblicher Weise eine Perforation zur Abnahme der Folie vom Hohlprofil auf. So wird die Folie beispielsweise beim Abreißen einer Lasche in axialer oder umfänglicher Richtung aufgerissen, wonach die Folie als Ganzes vom Hohlprofil abgenommen werden kann.

Aus der Druckschrift EP 2 202 440 A1 ist eine Vorrichtung zum Abdecken eines Hohlprofils in Form eines Rohres bekannt, welches ein kappenartiges Kunststoffteil in Form eines Deckels aufweist, welches den Profilquerschnitt des Rohres abdeckt und in axialer Richtung den Außendurchmesser des Rohres über einen Bereich ummantelt. Der Bereich der Kappe, welcher den Profilquerschnitt abdeckt, weist eine Perforierung auf und kann durch Lösen der Perforierung entfernt werden, so dass der Querschnitt des Hohlprofils frei ist und ein weiteres Rohr in den frei gewordenen Querschnitt steckbar ist.

Der am Hohlprofil verbleibende Teil des Kunststoffteils dient als Abstreifer zum Außendurchmesser des eingesteckten Rohres um das Eindringen von Verschmutzungen am Außenruchmesser des eingesteckten Rohres zu vermeiden, insbesondere bei einer Verlegung im Erdreich, denn dann besteht die Gefahr dass das Rohr mit Schlamm, Sand, Kies oder dergleichen verschmutzt ist (Absatz 0002). Um das Eindringen derartiger Verschmutzungen zu verhindern, muss der Abstreifer eine genügende Stabilität aufweisen. Gemäß der Absätze 0007 und 0021 besteht der Abstreifer daher aus einem zum Abstreifen geeignetem Kunststoffmaterial, insbesondere Polymer, Elastomer oder aus Gummi.

Offensichtlich wird bei diesem Stand der Technik lediglich eine Steckverbindung erzeugt, wobei das eingesteckte Rohr über eine im Hohlprofil angeordnete Dichtung fixiert und abgedichtet und über den Abstreifer das Eindringen von Verschmutzungen verhindert wird. Der Abstreifer bleibt dauerhaft an der hergestellten Rohrverbindung.

Eine Pressverbindung zwischen dem Hohlprofil und dem damit gefügtem Rohr ist nicht vorgesehen.

Der Erfindung liegt somit die Aufgabe zugrunde, eine Vorrichtung zum Abdecken von Hohlprofilen zu schaffen, die einen sicheren Schutz des Hohlprofilinneren bis zur Folienabnahme gewährleistet und einen Indikator schafft, der ersichtlich macht, ob eine Verbindung zwischen Rohren, Fittingen und/oder Muffen bereits ordnungsgemäß verpresst ist.

Die Erfindung löst die gestellte Aufgabe mit einer Folie gemäß dem Anspruch 1 und mit einer Kombination aus einer Vorrichtung zum Abdecken eines Hohlprofiles und einem Hohlprofil gemäß dem Anspruch 2.

Durch ein Abnehmen des einen Teils der Folie vom Hohlprofil wird der Aufnahmequerschnitt des Hohlprofils derart freigegeben, das eine ordnungsgemäße Montage, insbesondere ein Zusammensetzen zu einem Leitungssystem unkompliziert und rasch möglich ist. Gegebenenfalls kann auch noch eine Dichtung in das Hohlprofil eingesetzt werden, falls erforderlich. Der am Hohlprofil verbleibende Teil der Folie bildet den erfindungsgemäß vorgesehenen Indikator, der ersichtlich macht, ob eine Verbindung zwischen Rohren, Fittingen und/oder Muffen bereits ordnungsgemäß erfolgt ist, insbesondere ist der am Hohlprofil verbleibende Teil der Folie derart ausgebildet, dass er vom Hohlprofil abfällt, sobald eine ordnungsgemäße Verbindung, insbesondere Pressverbindung, mit einem geeigneten Werkzeug hergestellt wurde.

Dazu ist der zweite Teil der Folie derart ausgebildet, dass er sich beim Herstellen einer Pressverbindung zwischen dem Hohlprofil und einem in den Aufnahmequerschnitt des Hohlprofils eingesetzten Anschlussprofil vom Hohlprofil löst. Allerdings könnte alternativ auch ein geeigneter Kleber vorgesehen sein, mit dem die Folie am Hohlprofil befestigt ist und der durch die Druckeinwirkung beim Pressvorgang seine Haftwirkung verliert. Die Folie umfasst eine Mehrzahl an über die Aufnahmequerschnittsgrundfläche vorragenden Laschen, die insbesondere um einen vom Hohlprofil ausgebildeten Muffenansatz umgebogen sind. Damit wird eine schlanke, materialarme Vorrichtung geschaffen, welche die gestellte Aufgabe besonders gut löst.

Sehr einfache Montage und Handhabungsverhältnisse ergeben sich, wenn die Folie eine Schrumpffolie, insbesondere aus Polyethylen oder einem biologisch abbaubaren Polymer, ist. Auf zusätzlich erforderliche Kleber bzw. Haftvermittler kann dann verzichtet werden.

Zum einfachen Ablösen des ersten Teils der Folie empfiehlt es sich, wenn wenigstens eine der Laschen eine Handhabe zum Ablösen des vom Hohlprofil abnehmbaren Teils bildet.

Sind die Laschen des zweiten Teils der Folie über Stege miteinander verbunden, so wird insbesondere ein vorzeitiges Lösen und Abfallen der Laschen vor einem Verpressen der Verbindung sicher vermieden.

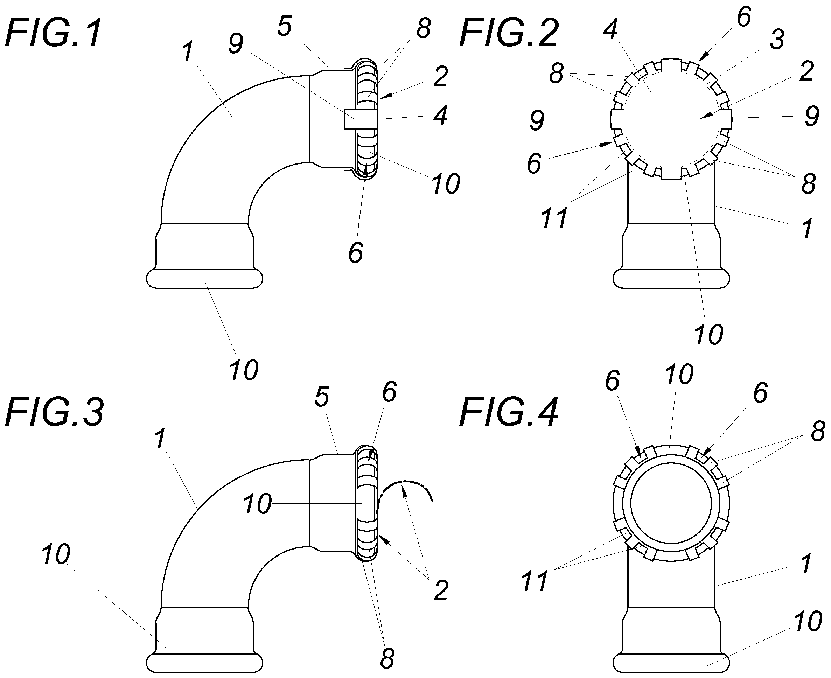

In der Zeichnung ist der Erfindungsgegenstand beispielsweise dargestellt. Es zeigen
- Fig. 1: : ein Hohlprofil in Form eines Rohrknies mit einer Folie in Seitenansicht,
- Fig. 2: : das Hohlprofil aus Fig. 1 in Vorderansicht,
- Fig. 3: : das Hohlprofil aus Fig. 1 mit abgezogenem zweiten Teil der Folie,
- Fig. 4: : das Hohlprofil aus Fig. 3 in Vorderansicht,
- Fig. 5: : das Hohlprofil aus Fig. 3 mit angesetztem Anschlussprofil beim Verpressen,
- Fig. 6: : das Hohlprofil aus Fig. 5 in Vorderansicht,
- Fig. 7: : das Hohlprofil aus Fig. 5 nach dem Verpressen,
- Fig. 8: : das Hohlprofil aus Fig. 7 in Vorderansicht.

Die erfindungsgemäße Vorrichtung zum Abdecken eines Hohlprofiles 1, nämlich eines Fittings in Form eines Rohrknies mit Anschlussmuffen für Anschlussprofile, wie Rohre umfasst wenigstens eine den Profilhohlquerschnitt, also den Anschlussquerschnitt, überdeckende Folie 2. Die Folie 2 weist eine Perforation 3 zur Abnahme wenigstens eines Teiles der Folie 2 vom Hohlprofil 1 auf. Die Perforation 3 ist derart ausgebildet, dass bei Abnahme eines Teils 4 der Folie 2 vom Hohlprofil 1 dieser abgenommene Teil 4 wenigstens den Aufnahmequerschnitt des Hohlprofils 1 für ein Anschlussprofil 7 freigibt und wenigstens ein zweiter, bis in den Profilumfangsmantel 5 vorragender, Teil 6 der Folie 2 am Hohlprofil verbleibt. Der Teil 6 umfasst dabei einen Aufnahmewulst für eine Dichtung bzw. die Aufnahmemuffe wenigstens teilweise.

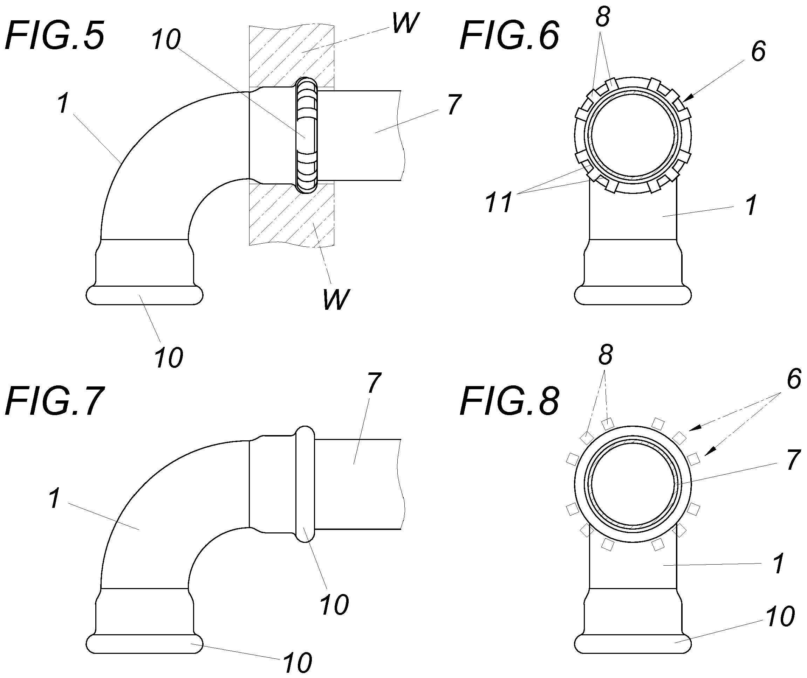

Der zweite Teil 6 der Folie 2 ist derart ausgebildet, dass er sich beim Herstellen einer Pressverbindung zwischen dem Hohlprofil 1 und einem in den Aufnahmequerschnitt des Hohlprofils 1 eingesetzten Anschlussprofil 7 vom Hohlprofil 1 löst (Fig. 5 bis 8). Ist die Folie 2 eine Schrumpffolie, insbesondere aus Polyethylen, so ist auf einfache Weise sichergestellt, dass sich der zweite Teil 6 der Folie 2 bei einem Verpressen der Verbindung mit einem Presswerkzeug W vom Hohlprofil 1 löst.

Die Folie 2 weist eine Mehrzahl an über die Aufnahmequerschnittsgrundfläche des Hohlprofils 1 vorragenden Laschen 8, 9 auf, die um einen vom Hohlprofil 1 ausgebildeten Muffenansatz 10 umgebogen sind. Vier der Laschen 9 bilden eine Handhabe zum Ablösen des vom Hohlprofil 1 abnehmbaren Teils 4 der Folie 2. Die übrigen Laschen 8 des zweiten Teils 6 der Folie 2 sind über Stege 11 miteinander verbunden, um ein ungewolltes vorzeitiges Ablösen des zweiten Teils 6 der Folie 2 vor dem Pressvorgang zu vermeiden.

## Patentansprüche

1. Folie (2) zum Abdecken eines Hohlprofils (1), wobei
- mit der Folie ein Profilhohlquerschnitt des Hohlprofils (1) überdeckbar ist,
- die Folie eine Perforation (3) zur Abnahme wenigstens eines ersten Teiles der Folie (2) vom Hohlprofil (1) aufweist,
- wenigstens ein zweiter Teil (6) der Folie in einen Profilumfangsmantel (5) des Hohlprofiles (1) ragbar ist,
- die Perforation (3) der Folie (2) derart ausgebildet ist, dass bei Abnahme des ersten eines Teils (4) der Folie (2) vom Hohlprofil (1) ein Aufnahmequerschnitt des Hohlprofils (1) freigebbar ist und wenigstens der zweite, bis in den Profilumfangsmantel (5) vorragende Teil (6) der Folie (2) am Hohlprofil (1) verbleibbar ist, **dadurch gekennzeichnet,**
- **dass** der zweite Teil (6) der Folie (2) derart ausgebildet ist, dass er beim Herstellen einer Pressverbindung zwischen dem Hohlprofil (1) und einem in den Aufnahmequerschnitt des Hohlprofils (1) eingesetzten Anschlussprofil (7) vom Hohlprofil (1) lösbar ist und
- **dass** der zweite Teil (6) der Folie (2) eine Mehrzahl an über eine Aufnahmequerschnittsgrundfläche vorragenden Laschen (8, 9) umfasst, die insbesondere um einen vom Hohlprofil (1) ausgebildeten Muffenansatz (10) umbiegbar sind.

2. Kombination aus einer Vorrichtung zum Abdecken eines Hohlprofiles (1) und einem Hohlprofil (1), insbesondere in Form eines Rohres, eines Fittings und/oder einer Muffe, wobei die Vorrichtung eine wenigstens den Profilhohlquerschnitt überdeckenden Folie (2) nach Anspruch 1 aufweist, welche Folie eine Perforation (3) zur Abnahme wenigstens des ersten Teiles der Folie (2) vom Hohlprofil (1) aufweist, wobei das Hohlprofil (1) einen Profilumfangsmantel (5) und einen Aufnahmequerschnitt zum Einsetzen eines Anschlussprofils (7) aufweist und wenigstens der zweite Teil der Folie bis in den Profilumfangsmantel (5) des Hohlprofiles (1) vorragt und die Perforation (3) derart ausgebildet ist, dass bei Abnahme des ersten Teils (4) der Folie (2) vom Hohlprofil (1) dieser abgenommene Teil (4) wenigstens den Aufnahmequerschnitt des Hohlprofils (1) freigibt und wenigstens der zweite, bis in den Profilumfangsmantel (5) vorragende Teil (6) der Folie (2) am Hohlprofil (1) verbleibt, **dadurch gekennzeichnet, dass** der zweite Teil (6) der Folie (2) derart ausgebildet ist, dass er beim Herstellen einer Pressverbindung zwischen dem Hohlprofil (1) und dem in den Aufnahmequerschnitt des Hohlprofils (1) eingesetzten Anschlussprofil (7) vom Hohlprofil (1) lösbar ist und wobei der am Hohlprofil (1) verbleibende Teil (6) der Folie (2) einen Indikator bildet, der ersichtlich macht, ob eine Verbindung zwischen dem Hohlprofil (1) und dem Anschlussprofil (7) bereits ordnungsgemäß erfolgt ist und wobei die Mehrzahl an über eine Aufnahmequerschnittsgrundfläche vorragenden Laschen (8, 9) insbesondere um einen vom Hohlprofil (1) ausgebildeten Muffenansatz (10) umgebogen sind.

3. Folie nach Anspruch 1 oder Kombination nach Anspruch 2, **dadurch gekennzeichnet, dass** die Folie (2) eine Schrumpffolie, insbesondere aus Polyethylen oder einem biologisch abbaubaren Polymer, ist.

4. Folie nach Anspruch 1 oder 3 oder Kombination nach einem der Ansprüche 2 bis 3, **dadurch gekennzeichnet, dass** wenigstens eine der Laschen (9) eine Handhabe zum Ablösen des vom Hohlprofil (1) abnehmbaren Teils (4) bildet.

5. Folie nach Anspruch 1, 3 oder 4 oder Kombination nach einem der Ansprüche 2 bis 4, **dadurch gekennzeichnet, dass** die Laschen (8) des zweiten Teils (6) der Folie (2) über Stege (11) miteinander verbunden sind.

## Claims

1. Film (2) for covering a hollow profile (1), wherein
- a hollow profile cross-section of the hollow profile (1) can be covered with the film,
- the film has a perforation (3) for removing at least a first part of the film (2) from the hollow profile (1),
- at least a second part (6) of the film can project into a profile circumferential jacket (5) of the hollow profile (1),
- the perforation (3) of the film (2) is designed in such a way that, when the first part (4) of the film (2) is removed from the hollow profile (1), a receiving cross-section of the hollow profile (1) can be released and at least the second part (6) of the film (2), which projects into the profile circumferential jacket (5), can remain on the hollow profile (1),
**characterized in that**
- the second part (6) of the film (2) is designed in such a way that it can be detached from the hollow profile (1) when a press connection is made between the hollow profile (1) and a connecting profile (7) inserted into the receiving cross-section of the hollow profile (1), and
- **in that** the second part (6) of the film (2) comprises a plurality of lugs (8, 9) which project beyond a receiving cross-sectional base surface and can be bent in particular around a sleeve projection (10) formed by the hollow profile (1).

2. Combination of a device for covering a hollow profile (1) and a hollow profile (1), in particular in the form of a pipe, a fitting and/or a sleeve, wherein the device has a film (2) according to claim 1 which covers at least the hollow profile cross-section, which film has a perforation (3) for removing at least the first part of the film (2) from the hollow profile (1), wherein the hollow profile (1) has a profile circumferential jacket (5) and a receiving cross-section for inserting a connecting profile (7), and at least the second part of the film projects into the profile circumferential jacket (5) of the hollow profile (1), and the perforation (3) is designed in such a way that, when the first part (4) of the film (2) is removed from the hollow profile (1), this removed part (4) releases at least the receiving cross-section of the hollow profile (1) and at least the second part (6) of the film (2) projecting into the profile circumferential jacket (5) remains on the hollow profile (1), **characterized in that** the second part (6) of the film (2) is formed such that it can be detached from the hollow profile (1) when a press connection is made between the hollow profile (1) and the connecting profile (7) inserted into the receiving cross-section of the hollow profile (1), and wherein the part (6) of the film (2) remaining on the hollow profile (1) forms an indicator, which indicates whether a connection between the hollow profile (1) and the connecting profile (7) has already been made properly and wherein the plurality of lugs (8, 9) projecting beyond a receiving cross-sectional base surface are bent in particular around a sleeve projection (10) formed by the hollow profile (1).

3. Film according to claim 1 or combination according to claim 2, **characterized in that** the film (2) is a shrink film, in particular of polyethylene or a biodegradable polymer.

4. Film according to claim 1 or 3 or combination according to one of claims 2 to 3, **characterized in that** at least one of the lugs (9) forms a handle for detaching the part (4) removable from the hollow section (1).

5. Film according to claim 1, 3 or 4 or combination according to one of claims 2 to 4, **characterized in that** the lugs (8) of the second part (6) of the film (2) are connected to one another via webs (11).

## Revendications

1. Film (2) pour couvrir un profilé creux (1), dans lequel
- le film peut couvrir une section de profilé creux du profilé creux (1),
- le film présente des perforations (3) pour le retrait d'au moins une première partie du film (2) du profilé creux (1) ;
- au moins une deuxième partie (6) du film peut dépasser dans une enveloppe de circonférence de profilé (5) du profilé creux (1),
- les perforations (3) du film (2) sont conformées de telle façon que lorsque la première partie (4) du film (2) est enlevée du profilé creux (1), une section de réception du profilé creux (1) peut être dégagée et au moins la deuxième partie (6) du film (2) dépassant jusque dans l'enveloppe de circonférence de profilé (5) peut rester sur le profilé creux (1).
**caractérisé en ce que**
- la deuxième partie (6) du film (2) est conformée de manière à pouvoir être détachée du profilé creux (1) lors de la création d'un assemblage pressé entre le profilé creux (1) et un profilé de raccordement (7) introduit dans la section de réception du profilé creux (1) et
- **en ce que** la deuxième partie (6) du film (2) comprend plusieurs pattes (8, 9) dépassant au-delà d'une surface de base de la section de réception, qui peuvent en particulier être recourbées autour d'un raccord de manchon (10) formé par le profilé creux (1).

2. Combinaison d'un dispositif pour la couverture d'un profilé creux (1) et d'un profilé creux (1), en particulier sous la forme d'un tuyau, d'un raccord et/ou d'un manchon, dans laquelle le dispositif présente un film (2) selon la revendication 1 recouvrant au moins la section de profilé creux, lequel film présente des perforations (3) pour retirer au moins la première partie du film (2) du profilé creux (1), dans laquelle le profilé creux (1) présente une enveloppe de circonférence de profilé (5) et une section de réception pour l'introduction d'un profilé de raccordement (7) et au moins la deuxième partie du film dépasse jusque dans l'enveloppe de circonférence de profilé (5) du profilé creux (1) et les perforations (3) sont conformées de telle façon que lorsque la première partie (4) du film (2) est retirée du profilé creux (1), cette partie retirée (4) dégage au moins la section de réception du profilé creux (1) et au moins la deuxième partie (6) du film (2) qui dépasse jusque dans l'enveloppe de circonférence de profilé (5) reste sur le profilé creux (1), **caractérisée en ce que** la deuxième partie (6) du film (2) est conformée de manière à pouvoir être détachée du profilé creux (1) lors de la création d'un assemblage pressé entre le profilé creux (1) et un profilé de raccordement (7) introduit dans la section de réception du profilé creux (1), la partie (6) du film (2) qui reste sur le profilé creux (1) formant un indicateur qui montre si un assemblage entre le profilé creux (1) et le profilé de raccordement (7) a déjà été réalisé correctement, et les plusieurs pattes (8, 9) qui dépassent au-delà d'une surface de base de la section de réception étant retournées en particulier autour d'un raccord de manchon (10) formé par le profilé creux (1).

3. Film selon la revendication 1 ou combinaison selon la revendication 2, caractérisé(e) en ce que le film (2) est un film rétractable, en particulier fait de polyéthylène ou d'un polymère biodégradable.

4. Film selon la revendication 1 ou 3 ou combinaison selon l'une des revendications 2 à 3, caractérisé(e) en ce qu'au moins une des pattes (9) forme une prise pour détacher la partie (4) qui peut être retirée du profilé creux (1).

5. Film selon la revendication 1, 3 ou 4 ou combinaison selon l'une des revendications 2 à 4, caractérisé(e) en ce que les pattes (8) de la deuxième partie (6) du film (2) sont reliées entre elles par des barrettes (11).
